# EUROPEAN PATENT SPECIFICATION

(11) **EP 4 381 877 B1**
(45) Date of publication and mention of the grant of the patent: **18.02.2026**
(21) Application number: 21755457.5
(22) Date of filing: 04.08.2021
(51) Int. Cl.: H04W 74/08, H04W 48/18, H04W 74/0833

(54) **RANDOM ACCESS CHANNEL STEERING BASED ON NETWORK SLICING**
DIREKTZUGRIFFSKANALLENKUNG AUF DER BASIS VON NETZWERK-SLICING
DIRECTION D'UN CANAL D'ACCÈS ALÉATOIRE SUR LA BASE D'UN DÉCOUPAGE EN TRANCHES D'UN RÉSEAU

(43) Date of publication of application: 12.06.2024
(73) Proprietor: Nokia Technologies Oy, 02610 Espoo (FI)
(72) Inventor: GÜRSU, Halit Murat, 81371 Munich (DE); TOMALA, Malgorzata, 54-513 Wroclaw (PL); BULAKCI, Ömer, 80997 Munich (DE); NASEER-UL-ISLAM, Muhammad, 81737 Munich (DE)
(74) Representative: Papula Oy
(86) International application number: PCT/EP2021/071782
(87) International publication number: WO 2023/011713

(56) References cited:
- US-A1- 2021 105 702
- INTEL CORPORATION: "Further considerations of slice based RACH", vol. RAN WG2, no. E-Meeting; 20210519 - 20210527, 11 May 2021 (2021-05-11), XP052006617, Retrieved from the Internet <URL:https://ftp.3gpp.org/tsg_ran/WG2_RL2/TSGR2_114-e/Docs/R2-2104874.zip R2-2104874_RACH_v01.docx> [retrieved on 20210511]
- LENOVO ET AL: "Further discussion on slice-based PRACH configuration", vol. RAN WG2, no. Electronic; 20210519 - 20210527, 10 May 2021 (2021-05-10), XP052003794, Retrieved from the Internet <URL:https://ftp.3gpp.org/tsg_ran/WG2_RL2/TSGR2_114-e/Docs/R2-2105213.zip R2-2105213_Slice_based_PRACH_config.doc> [retrieved on 20210510]

## Description

### TECHNICAL FIELD

The present disclosure relates generally to the field of wireless communications and, in particular, to techniques for performing a Random Access Channel (RACH) procedure in a wireless communication network that supports network slicing.

### BACKGROUND

The next generation of wireless communication networks (e.g., fifth-generation (5G) networks) is expected to support different network slices. Each network slice can be considered as an independent network partition optimized to support the performance requirements of a certain application or service category. For example, a wireless communication network may comprise a first network slice designed to support an "Enhanced Mobile Broadband (eMBB)" service category, a second network slice designed to support an "Ultra-reliable and Low Latency Communications (ULLC)" service category, and a third network slice designed to support a "Internet of Things (IoT)" application category. It should be also noted that a particular type of network slice may be deployed multiple times (i.e., have multiple instances) within the same wireless communication network. For example, a network operator may deploy multiple loT slice instances to support multiple loT customers, such as utility companies, entertainment companies, etc.

To support several service categories, it is required for the same UE to connect to multiple network slices. A RACH procedure is usually used during each initial access when the UE wants to join a particular network slice. As targeted by 3rd Generation Partnership Project (3GPP) Release 17 (Rel-17), network slice-specific RACH configurations would be introduced, meaning that different RACH resources and RACH configurations could be configured for different network slices, including two-step and four-step network slice-specific RACH procedures as well as associated fallback mechanisms. In addition, 3GPP Rel-17 also recites some common RACH configurations that can be used by all UEs, again also including the two-step and four-step common RACH resources and the associated fallback mechanisms.

For example, US 2021/105702 A1 discloses an accessing method related to network slicing, being applied to a base station. The accessing method includes: generating minimum system information including two items: i) indication information indicating presence of physical random access channel (PRACH) configuration information, corresponding to one or more network slices, in other system information, and ii) common random access channel configuration information; and sending the minimum system information to a UE.

All these configurations provide the flexibility to introduce specialized RACH configurations for special network slices/services but, at the same time, cause additional complexity. More specifically, these configurations require the RACH resources (which are limited) to be divided into different categories like network slice-specific, common, etc. This may lead to a higher RACH resource fragmentation which should be done carefully. Moreover, the network slice-specific and common RACH configurations introduce a lot of possibilities for the fallback mechanisms. For example, there may be a fallback mechanism for switching from a two-step network slice-specific RACH procedure to a four-step network slice-specific RACH procedure, or a fallback mechanism for switching from the two-step network slice-specific RACH procedure to a two-step common RACH procedure, or a fallback mechanism for switching from the two-step network slice-specific RACH procedure to a four-step common RACH procedure, etc. However, not all such combinations would be required as this introduces quite some additional complexity as well as a requirement to configure additional RACH resources for each category.

Therefore, there is a need for a technique that would allocate the RACH resources among the available network slices more efficiently, so that the UE could use an optimal RACH configuration considering a current RACH load across the network slices. Moreover, such a technique should provide an optimal fallback mechanism that would minimize the RACH resource fragmentation and reduce the overall procedure complexity.

### SUMMARY

This summary is provided to introduce a selection of concepts in a simplified form that are further described below in the detailed description. This summary is not intended to identify key features of the present disclosure, nor is it intended to be used to limit the scope of the present disclosure.

It is an objective of the present disclosure to provide a technical solution that allows a RACH to be effectively steered in a wireless communication network with network slicing.

The objective above is achieved by the features of the independent claims in the appended claims. Further embodiments and examples are apparent from the dependent claims, the detailed description and the accompanying drawings.

According to a first aspect, a Radio Access Network (RAN) node is provided. The RAN node comprises means for generating RACH steering information for a set of network slices supported in a wireless communication network. The RACH steering information comprises an indication for a UE to select one of at least one available RACH configuration. Each of the at least one available RACH configuration comprises: (i) at least one of a network slice-specific RACH resource, a network slice-specific back-up RACH resource and a common RACH resource; and (ii) a probability with which each of said at least one of the network slice-specific RACH resource, the network slice-specific back-up RACH resource and the common RACH resource is to be used. The RAN node further comprises means for transmitting the RACH steering information to the UE. By using such RACH steering information, it is possible to dynamically adjust a RACH load among multiple network slice-specific RACH configurations and common RACH configurations, thereby efficiently balancing the RACH load (i.e., RACH utilization rate) across the set of network slices.

In one example embodiment of the first aspect, each of the at least one available RACH configuration causes the UE to:
- share, at least partly, the network slice-specific RACH resource of at least one network slice of the set of network slices with at least one other network slice of the set of network slices; and/or
- share, at least partly, the network slice-specific back-up RACH resource of at least one network slice of the set of network slices with at least one other network slice of the set of network slices; and/or
- use, at least partly, the common RACH resource for at least one network slice of the set of network slice when a RACH fallback procedure is initiated for the at least one network slice.

By using such RACH configuration(s), it is possible to adjust the RACH load more efficiently. Moreover, such RACH configuration(s) may provide an optimal fallback framework, particularly for the two-step network slice-specific and four-step network slice-specific RACH procedures introduced in 3GPP Rel-17.

In one example embodiment of the first aspect, the RAN node further comprises means for receiving at least one network slice-specific RACH policy for the set of network slices from a network management entity. The RAN node further comprises means for generating the RACH steering information based on the at least one network slice-specific RACH policy.

In one example embodiment of the first aspect, the RAN node further comprises means for receiving at least one network slice-specific resource sharing quota for the set of network slices from a network management entity. The RAN node further means for generating the RACH steering information based on the at least one network slice-specific resource sharing quota.

In one example embodiment of the first aspect, the RAN node further comprises means for receiving a UE report from the UE, the UE report comprising: an indication of a RACH configuration selected among the at least one available RACH configuration based on the RACH steering information; an execution duration of a RACH procedure based on the selected RACH configuration; and an indication of whether the UE has experienced a RACH configuration-related collision during the RACH procedure. The RAN node further comprises means for forwarding the UE report to the network management entity.

In one example embodiment of the first aspect, the RACH steering information is generated based on at least one of: a load on the network slice-specific RACH resources among the set of network slices; a load on the network slice-specific back-up RACH resources among the set of network slices; a load on the common RACH resource among the set of network slices; or an expected traffic load for each network slice of the set of network slices.

In one example embodiment of the first aspect, the RAN node further comprises means for receiving a UE report from the UE, the UE report comprising: an indication of a RACH configuration selected among the at least one available RACH configuration based on the RACH steering information; an execution duration of a RACH procedure based on the selected RACH configuration; and an indication of whether the UE has experienced a RACH configuration-related collision during the RACH procedure. The RAN node further comprises means for, based on the UE report, deciding whether to modify the RACH steering information.

In one example embodiment of the second aspect, the RAN node further comprises means for encoding the RACH steering information into a set of Unified Access Control (UAC) parameters and means for transmitting the set of UAC parameters to the UE via the broadcast signaling. Thus, the existing UAC framework may be used to provide the UE with the RACH steering information.

According to a second aspect, a network management entity is provided. The network management entity comprises means for generating, for a set of network slices supported in a wireless communication network, at least one network slice-specific RACH policy or at least one network slice-specific resource sharing quota such that a RAN node is able to generate RACH steering information for a UE based on the at least one network slice-specific RACH policy or the at least one network slice-specific resource sharing quota. In turn, the RACH steering information comprises an indication for the UE to select one of at least one available RACH configuration. Each of the at least one available RACH configuration comprises: (i) at least one of a network slice-specific RACH resource, a network slice-specific back-up RACH resource and a common RACH resource; and (ii) a probability with which each of said at least one of the network slice-specific RACH resource, the network slice-specific back-up RACH resource and the common RACH resource is to be used. The network management entity further comprises means for providing the at least one network slice-specific RACH policy or the at least one network slice-specific resource sharing quota to the RAN node. By using such a network slice-specific RACH policy or such a network slice-specific resource sharing quota, it is possible to generate relevant RACH steering information which may be then used to dynamically adjust the RACH load among multiple network slice-specific RACH configurations and common RACH configurations, thereby efficiently balancing the RACH load across the set of network slices.

In one example embodiment of the second aspect, the network management entity further comprises means for receiving a UE report from the RAN node. The UE report is generated by the UE and comprises an indication of a RACH configuration selected by the UE among the at least one available RACH configuration based on the RACH steering information. The UE report further comprises an execution duration of the RACH procedure based on the selected RACH configuration, as well as an indication of whether the UE has experienced a RACH configuration-related collision during the RACH procedure. In this embodiment, the network management entity further comprises means for using the UE report to decide whether to modify the at least one network slice-specific RACH policy or the at least one network slice-specific resource sharing quota. By using such a UE report, it is possible to properly optimize the network slice-specific RACH policy (policies) or the network slice-specific RACH quota(s) to improve network slice-specific RACH performance.

According to a third aspect, a UE is provided. The UE comprises means for receiving RACH steering information for a set of network slices supported in a wireless communication network from a RAN node. The RACH steering information comprises an indication for the UE to select one of at least one available RACH configuration. Each of the at least one available RACH configuration comprises: (i) at least one of a network slice-specific RACH resource, a network slice-specific back-up RACH resource and a common RACH resource; and (ii) a probability with which each of said at least one of the network slice-specific RACH resource, the network slice-specific back-up RACH resource and the common RACH resource is to be used. The UE further comprises means for receiving a network slice-specific scheduling request for a network slice of the set of network slices and means for selecting, from the at least one available RACH configuration, a RACH configuration corresponding to the network slice based on the RACH steering information. The UE further comprises means for using the network slice-specific scheduling request and the selected RACH configuration to execute a RACH procedure for the network slice. By so doing, it is possible to dynamically adjust the RACH load among multiple network slice-specific RACH configurations and common RACH configurations, thereby efficiently balancing the RACH load across the set of network slices.

In one example embodiment of the third aspect, each of the at least one available RACH configuration causes the UE to:
- share, at least partly, the network slice-specific RACH resource of at least one network slice of the set of network slices with at least one other network slice of the set of network slices; and/or
- share, at least partly, the network slice-specific back-up RACH resource of at least one network slice of the set of network slices with at least one other network slice of the set of network slices; and/or
- use, at least partly, the common RACH resource for at least one network slice of the set of network slices when a RACH fallback procedure is initiated for the at least one network slice.

By using such RACH configuration(s), it is possible to adjust the RACH load more efficiently. Moreover, such RACH configuration(s) may provide an optimal fallback framework, particularly for the two-step network slice-specific and four-step network slice-specific RACH procedures introduced in 3GPP Rel-17.

In one example embodiment of the third aspect, the RACH steering information is encoded into a set of UAC parameters. In this embodiment, the UE further comprises meanse for receiving the set of UAC parameters via the broadcast signaling from the RAN node. Thus, the existing UAC framework may be used to provide the UE with the RACH steering information.

In one example embodiment of the third aspect, the UE further comprises means for generating a UE report after the RACH procedure is executed by using the selected RACH configuration. The UE report comprises an indication of the selected RACH configuration, an execution duration of the RACH procedure based on the selected RACH configuration, as well as an indication of whether the UE has experienced a RACH configuration-related collision during the RACH procedure. In this embodiment, the UE further comprises means for transmitting the UE report to the RAN node. The RAN node may then either use the UE report by itself or forward it to the network management entity for its analysis. Thus, the UE report may be eventually used to optimize the RACH steering information.

In one example embodiment of the third aspect, the RACH configuration corresponding to the network slice comprises at least two of the network slice-specific RACH resource, the network slice-specific back-up RACH resource and the common RACH resource, and the probabilities of said at least two of the network slice-specific RACH resource, the network slice-specific back-up RACH resource and the common RACH resource are presented as a uniform distribution between 0 and 99. In this embodiment, the UE further comprises means for selecting, in the RACH configuration corresponding to the network slice, a RACH resource from among said at least two of the network slice-specific RACH resource, the network slice-specific back-up RACH resource and the common RACH resource by using a random number generator, and the RACH procedure is executed based on the selected RACH resource.

Other features and advantages of the present disclosure will be apparent upon reading the following detailed description and reviewing the accompanying drawings.

### BRIEF DESCRIPTION OF THE DRAWINGS

The present disclosure is explained below with reference to the accompanying drawings in which:
FIG. 1 schematically shows a structure of typical Single-Network Slice Selection Assistance Information (S-NSSAI) in accordance with the prior art;
FIG. 2 shows an interaction diagram that explains an existing fallback mechanism for switching from a two-step network slice-specific Random Access Channel (RACH) procedure to a four-step network slice-specific RACH procedure;
FIG. 3 shows an interaction diagram that explains an existing fallback mechanism for switching from the four-step network slice-specific RACH procedure to a four-step common RACH procedure;
FIG. 4 shows a general block-scheme of a network management entity in accordance with one example embodiment;
FIG. 5 shows a flowchart of a method for operating the network management entity shown in FIG. 4 in accordance with a first example embodiment;
FIG. 6 shows a general block-scheme of a Radio Access Network (RAN) node in accordance with one example embodiment;
FIG. 7 shows a flowchart of a method for operating the RAN node shown in FIG. 6 in accordance with one example embodiment;
FIG. 8 shows a general block-scheme of a User Equipment (UE) in accordance with one example embodiment;
FIG. 9 shows a flowchart of a method for operating the UE shown in FIG. 8 in accordance with one example embodiment; and
FIG. 10 shows an interaction diagram that explains the interaction between the network management entity shown in FIG. 4, the RAN node shown in FIG. 600, and the UE shown in FIG. 8 in accordance with one example embodiment.

### DETAILED DESCRIPTION

Various embodiments of the present disclosure are further described in more detail with reference to the accompanying drawings. However, the present disclosure can be embodied in many other forms and should not be construed as limited to any certain structure or function discussed in the following description. In contrast, these embodiments are provided to make the description of the present disclosure detailed and complete.

According to the detailed description, it will be apparent to the ones skilled in the art that the scope of the present disclosure encompasses any embodiment thereof, which is disclosed herein, irrespective of whether this embodiment is implemented independently or in concert with any other embodiment of the present disclosure. For example, the apparatuses and methods disclosed herein can be implemented in practice by using any numbers of the embodiments provided herein. Furthermore, it should be understood that any embodiment of the present disclosure can be implemented using one or more of the elements presented in the appended claims.

Unless otherwise stated, any embodiment recited herein as "example embodiment" should not be construed as preferable or having an advantage over other embodiments.

According to the example embodiments disclosed herein, a User Equipment (UE) may refer to an electronic computing device that is configured to perform wireless communications. The UE may be implemented as a mobile station, a mobile terminal, a mobile subscriber unit, a mobile phone, a cellular phone, a smart phone, a cordless phone, a personal digital assistant (PDA), a wireless communication device, a desktop computer, a laptop computer, a tablet computer, a gaming device, a netbook, a smartbook, an ultrabook, a medical mobile device or equipment, a biometric sensor, a wearable device (e.g., a smart watch, smart glasses, a smart wrist band, etc.), an entertainment device (e.g., an audio player, a video player, etc.), a vehicular component or sensor (e.g., a driver-assistance system), a smart meter/sensor, an unmanned vehicle (e.g., an industrial robot, a quadcopter, etc.) and its component (e.g., a self-driving car computer), industrial manufacturing equipment, a global positioning system (GPS) device, an Internet-of-Things (IoT) device, an Industrial loT (IIoT) device, a machine-type communication (MTC) device, a group of Massive loT (MloT) or Massive MTC (mMTC) devices/sensors, or any other suitable mobile device configured to support wireless communications. In some embodiments, the mobile UE may refer to at least two collocated and inter-connected UEs thus defined.

As used in the example embodiments disclosed herein, a Radio Access Network (RAN) node may relate to a fixed point of communication for the mobile UE in a particular wireless communication network. The RAN node is used to connect the UE to a Data Network (DN) through a Core Network (CN) and may be referred to as a base transceiver station (BTS) in terms of the 2G communication technology, a NodeB in terms of the 3G communication technology, an evolved NodeB (eNodeB) in terms of the 4G communication technology, and a gNB in terms of the 5G New Radio (NR) communication technology. The RAN node may serve different cells, such as a macrocell, a microcell, a picocell, a femtocell, and/or other types of cells. The macrocell may cover a relatively large geographic area (for example, at least several kilometers in radius). The microcell may cover a geographic area less than two kilometers in radius, for example. The picocell may cover a relatively small geographic area, such, for example, as offices, shopping malls, train stations, stock exchanges, etc. The femtocell may cover an even smaller geographic area (for example, a home). Correspondingly, the network node serving the macrocell may be referred to as a macro node, the network node serving the microcell may be referred to as a micro node, and so on.

According to the example embodiments disclosed herein, a wireless communication network, in which the mobile UE and the network node communicate with each other, may refer to a cellular or mobile network, a Wireless Local Area Network (WLAN), a Wireless Personal Area Networks (WPAN), a Wireless Wide Area Network (WWAN), a satellite communication (SATCOM) system, or any other type of wireless communication networks.

Each of these types of wireless communication networks supports wireless communications according to one or more communication protocol standards. For example, the cellular network may operate according to the Global System for Mobile Communications (GSM) standard, the Code-Division Multiple Access (CDMA) standard, the Wide-Band Code-Division Multiple Access (WCDM) standard, the Time-Division Multiple Access (TDMA) standard, or any other communication protocol standard, the WLAN may operate according to one or more versions of the IEEE 802.11 standards, the WPAN may operate according to the Infrared Data Association (IrDA), Wireless USB, Bluetooth, or ZigBee standard, and the WWAN may operate according to the Worldwide Interoperability for Microwave Access (WiMAX) standard.

As used in the example embodiments disclosed herein, network slicing may be considered as a key 5G feature to support different services using the same underlying mobile network infrastructure. Network slices may differ either in their service requirements like URLLC and eMBB, or the tenant that provides those services. Each network slice is uniquely identified via Single-Network Slice Selection Assistance Information (S-NSSAI). Current 3GPP specifications allow a mobile UE to be simultaneously connected and served by at most eight S-NSSAls. On other hand, each cell may support tens or even hundreds of S-NSSAls, e.g., in the current 3GPP specifications a tracking area may have a support up to 1024 network slices.

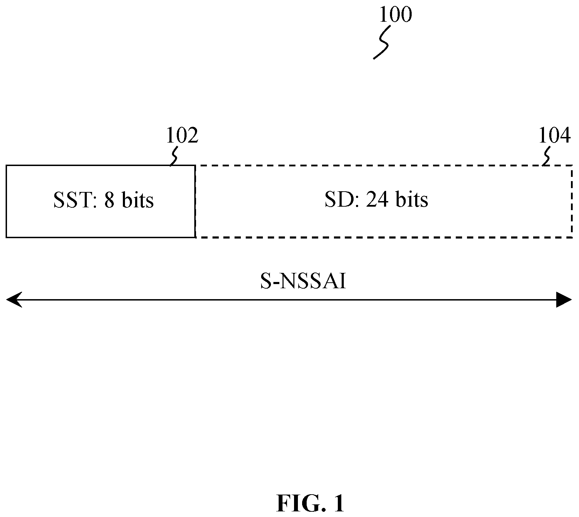

FIG. 1 schematically shows a structure 100 of typical S-NSSAI in accordance with the prior art. The structure 100 of the typical S-NSSAI comprises both a Slice Service Type (SST) field 102 and a Slice Differentiator (SD) field 104 with a total length of 32 bits. It should be noted that the structure 100 of the typical S-NSSAI may include only the SST field 102, in which case the length of the S-NSSAI is 8 bits only. The SST field 102 may have standardized and non-standardized values. Values from 0 to 127 belong to a standardized SST range. For example, the SST value of 1 may indicate that a desired network slice is suitable for handling 5G eMBB services, the SST value of 2 may indicate that the desired network slice is suitable for handling URLLC services, etc. The SD field 104 is operator-defined only.

It should be noted that 3GPP TR 28.801 describes three functional entities for managing one or more network slices or network slice instances (NSIs) to support communication application or services. These functional entities include a Communication Service Management Function (CSMF), a Network Slice Management Function (NSMF), and a Network Slice Subnet Management Function (NSSMF). The CSMF is responsible for translating a communication service-related requirement to network slice-related requirements. The NSMF is responsible for management and orchestration of NSIs and derives network slice subnet-related requirements from the network slice-related requirements. The NSSMF is responsible for the management and orchestration of Network slice subnet instances (NSSls). Each of these three functional entities may be analogous to a virtual machine (VM) running on sliced resources provided by a supervisor. In other words, each of these three functional entities provides a management interface for the sliced resources, in a manner analogous to an operating system (virtualized to as a VM) which provides access to sliced computing resources.

As used in the embodiments disclosed herein, a Random Access Channel (RACH) may refer to a channel that may be shared by multiple UEs and may be used by the UEs to access one or more network slices for communications. Correspondingly, a RACH procedure may refer to a procedure for establishing such a channel. For example, the RACH may be used for call setup and to access the network slice(s) for data transmissions. The RACH procedure may be used for initial access to a certain network slice when a UE switches from a Radio Resource Control (RRC) idle mode to an RRC connected mode, or when performing handover to a target cell in the RRC connected mode. Moreover, the RACH procedure may be used for downlink (DL) and/or uplink (UL) data arrival when the UE is in the RRC idle or RRC inactive modes.

As follows from 3GPP Rel-17, different RACH resources and RACH configurations could be configured for different network slices, including two-step and four-step network slice-specific RACH procedures and associated fallback mechanisms. To minimize the complexity of the overall network slice-specific RACH configuration, it is necessary to configure the RACH resources and the fallback mechanisms by considering their impact on available signaling resources and the complexity of the RACH procedure.

The reason for introducing a fallback mechanism for switching from a two-step RACH procedure to a four-step RACH procedure is that there is a fundamental difference between the two procedures. There are two main reasons to define such a fallback mechanism:
1) A possible lack of random access response (valid reason to initiate only for the two-step RACH to four-step RACH fallback mechanism);
2) A two-step RACH procedure load (valid reason to initiate any RACH fallback mechanism).

Differently to the two-step RACH procedure, the four-step RACH procedure has an extra message that goes from a RAN node to a UE and is called a Random Access Response (RAR). The RAR provides Timing Advance (TA) and Transmit Power Control (TPC) information to the UE. The first technical reasoning for this fallback would be the lack of this corrective feedback and as such, if the UE is not successful with the two-step RACH procedure, it can switch to the four-step RACH procedure and can acquire the RAR to adjust the TA and the TPC accordingly. The second technical reasoning is that random access is a blind procedure for the whole network. UEs access the RACH without prior knowledge of the network on access intentions. This means that network can never know deterministically what the RACH load at a certain time instance will be. A high RACH load (or, in other words, RACH utilization rate) may mean that UEs cause uplink interference to each other, thereby leading to a RACH failure.

Given the above, there is a critical need for defining an optimal fallback framework, particularly for the two-step and four-step network slice-specific RACH procedures introduced in 3GPP Rel-17. Such an optimal fallback mechanism needs to minimize RACH resource fragmentation and reduce the overall procedure complexity. However, it is currently unclear how fallback mechanisms will be introduced for the RACH procedures with the network slicing.

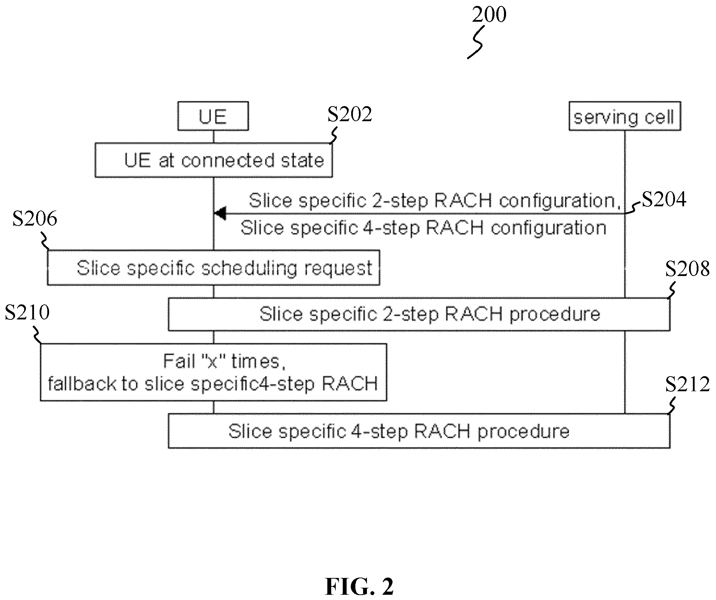

FIG. 2 shows an interaction diagram 200 that explains an existing fallback mechanism for switching from the two-step network slice-specific RACH procedure to the four-step network slice-specific RACH procedure. The interaction diagram 200 starts with a step S202, in which a UE moves to a connected state (e.g., the RRC connected state). Then, a next step S204 is initiated, in which the UE receives a two-step network slice-specific RACH configuration and a four-step network slice-specific RACH configuration from a serving cell or, in other words, from a RAN node controlling the serving cell. After that, the interaction diagram 200 goes on to a step S206, in which it is assumed that the UE receives a network slice-specific scheduling request (e.g., a mobile originated (MO) traffic). In response to the network slice-specific scheduling request, the UE decides to execute the two-step network slice-specific RACH procedure in a next step S208. Further, the interaction diagram 200 proceeds to a step S210, in which it is assumed that the UE observes a failure during the execution of the two-step network slice-specific RACH procedure. If the UE fails to finish the RACH procedure a certain number of times, the UE decides to fall back or switch from the two-step network slice-specific RACH procedure to the four-step network slice-specific RACH procedure in a next step S212. However, if the UE also observes a failure during the execution of the four-step network slice-specific RACH procedure, it should keep on trying as with the normal four-step RACH procedure. This provides the UE no solution except waiting in case there is a high load in a four-step network slice-specific RACH.

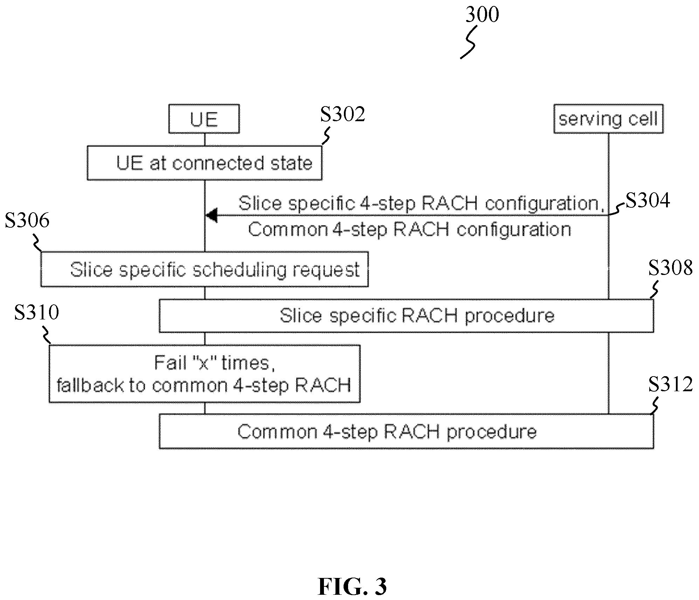

FIG. 3 shows an interaction diagram 300 that explains an existing fallback mechanism for switching from a four-step network slice-specific RACH procedure to a common four-step RACH procedure. The interaction diagram 300 starts with a step S302, in which a UE moves to a connected state (e.g., the RRC connected state). Then, a next step S304 is initiated, in which the UE receives a four-step network slice-specific RACH configuration and a common four-step RACH configuration from a serving cell or, in other words, from a RAN node controlling the serving cell. After that, the interaction diagram 300 goes on to a step S306, in which it is assumed that the UE receives a network slice-specific scheduling request (e.g., a MO traffic). In response to the network slice-specific scheduling request, the UE decides to execute the four-step network slice-specific RACH procedure in a next step S308. Further, the interaction diagram 300 proceeds to a step S310, in which it is assumed that the UE observes a failure during the execution of the four-step network slice-specific RACH procedure. If the UE fails to finish the RACH procedure a certain number of times, the UE decides to fall back or switch from the four-step network slice-specific RACH procedure to the common four-step RACH procedure in a next step S312. However, if the UE also fails with the common four-step RACH procedure, it should keep trying to execute this RACH procedure. There is no guarantee that a common four-step RACH will be less loaded then a four-step network slice-specific RACH. Thus, it is not sure if such a fallback mechanism is helpful at all. It may be even counterproductive.

As an alternative, the RAN node may configure new parameters to flexibly control whether to support the fallback from the network slice-specific RACH procedure to the common RACH procedure. For example, if the new parameters used for the fallback from the two-step network slice-specific RACH procedure to the four-step common RACH procedure is set to infinite, it implicitly indicates that this fallback mechanism is not supported. In this case, the UE has to try the two-step network slice-specific RACH procedure and will fail until it falls back to the four-step common RACH procedure. This would cause a delay in all the RACH procedures.

The example embodiments disclosed herein provide a technical solution that allows mitigating or even eliminating the above-sounded drawbacks peculiar to the prior art. In particular, the technical solution disclosed herein involves generating, at a RAN node, RACH steering information for a set of network slices supported in a wireless communication network. The RACH steering information comprises an indication for a UE to select one of available RACH configurations. Each of the available RACH configurations comprises: (i) at least one of a network slice-specific RACH resource, a network slice-specific back-up RACH resource and a common RACH resource; and (ii) a probability with which each of said at least one of the network slice-specific RACH resource, the network slice-specific back-up RACH resource and the common RACH resource is to be used. In one embodiment, the RACH steering information may be defined based on at least one network slice-specific RACH policy or at least one network slice-specific resource sharing quota provided from a network management entity (e.g., an NSMF) to the RAN node. In another embodiment, the RAN node may generate RACH steering information based on available local information about the set of network slices. Once the RACH steering information is generated, the RAN node transmits it to a UE. By using the RACH steering information, it is possible to dynamically adjust a RACH load among multiple network slice-specific RACH configurations and common RACH configurations, thereby efficiently balancing the RACH load (i.e., RACH utilization rate) across the set of network slices

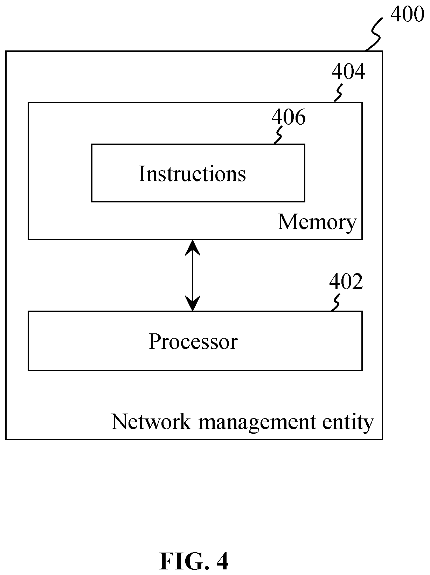

FIG. 4 shows a general block-scheme of a network management entity 400 in accordance with one example embodiment. The network management entity 400 is intended to operate in a CN that supports the above-mentioned network slicing. For example, the network management entity 400 may be implemented as an NSMF or CSMF. As shown in FIG. 4, the network management entity 400 comprises a processor 402 and a memory 404 coupled to the processor 402. The memory 404 stores processor-executable instructions 406 which, when executed by the processor 402, cause the processor 402 to implement the aspects of the present disclosure, as will be described below in more detail. It should be noted that the number, arrangement and interconnection of the constructive elements constituting the network management entity 400, which are shown in FIG. 4, are not intended to be any limitation of the present disclosure, but merely used to provide a general idea of how the constructive elements may be implemented within the network management entity 400. For example, the processor 402 may be replaced with several processors, as well as the memory 404 may be replaced with several removable and/or fixed storage devices, depending on particular applications.

The processor 402 may be implemented as a CPU, general-purpose processor, single-purpose processor, microcontroller, microprocessor, application specific integrated circuit (ASIC), field programmable gate array (FPGA), digital signal processor (DSP), complex programmable logic device, etc. It should be also noted that the processor 402 may be implemented as any combination of one or more of the aforesaid. As an example, the processor 402 may be a combination of two or more microprocessors.

The memory 404 may be implemented as a classical nonvolatile or volatile memory used in the modern electronic computing machines. As an example, the nonvolatile memory may include Read-Only Memory (ROM), ferroelectric Random-Access Memory (RAM), Programmable ROM (PROM), Electrically Erasable PROM (EEPROM), solid state drive (SSD), flash memory, magnetic disk storage (such as hard drives and magnetic tapes), optical disc storage (such as CD, DVD and Blu-ray discs), etc. As for the volatile memory, examples thereof include Dynamic RAM, Synchronous DRAM (SDRAM), Double Data Rate SDRAM (DDR SDRAM), Static RAM, etc.

The processor-executable instructions 406 stored in the memory 404 may be configured as a computer-executable code which causes the processor 402 to perform the aspects of the present disclosure. The computer-executable code for carrying out operations or steps for the aspects of the present disclosure may be written in any combination of one or more programming languages, such as Java, C++, or the like. In some examples, the computer-executable code may be in the form of a high-level language or in a pre-compiled form and be generated by an interpreter (also pre-stored in the memory 404) on the fly.

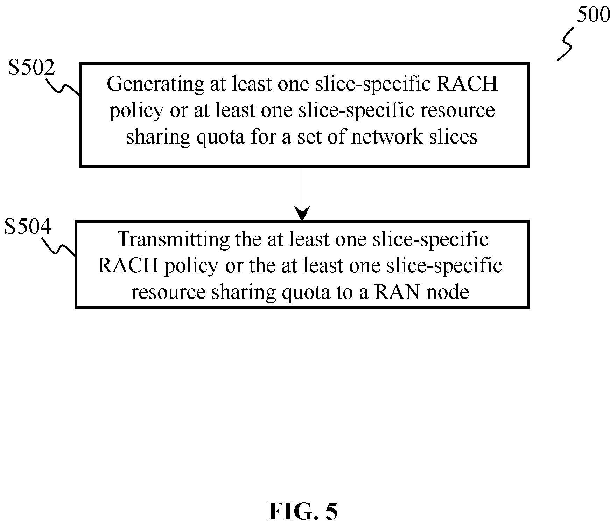

FIG. 5 shows a flowchart of a method 500 for operating the network management entity 400 in accordance with one example embodiment. The method 500 starts with a step S502, in which the processor 402 generates at least one network slice-specific RACH policy or at least one network slice-specific resource sharing quota for a set of network slices, for example, based on one or more service level agreements applied to the set of network slices (e.g., certain network slices like the ones relating to public safety may have strict isolation requirements).

As for the network slice-specific resource sharing quota, it can be defined in 3GPP TS 28.541 as follows: the network slice-specific resource sharing quota may refer to a percentage of gNB resources that can be allocated to a particular network slice either in a dedicated, prioritized or shared manner. However, this defines the "general" resource allocation for network slices and is not limited to the RACH resources only. At the same time, even if the network slice-specific resource sharing quota is related to the overall network slice-specific resources, a gNB can infer some RACH steering information from such a resource sharing quota. In other words, the network slice-specific resource sharing quota may be still useful for generating the RACH steering information at the gNB.

As for the network slice-specific RACH policy, it may comprise at least one of permissions:
(i) a permission to share, at least partly, a network slice-specific RACH resource of at least one network slice of the set of network slices with at least one other network slice of the set of network slices;
(ii) a permission to share, at least partly, a network slice-specific back-up RACH resource of at least one network slice of the set of network slices with at least one other network slice of the set of network slices; and
(iii) a permission to use, at least partly, a common RACH resource for at least one network slice of the set of network slices when a RACH fallback procedure is initiated.

It should be noted that the RACH resources mentioned in the above permissions (i)-(iii) may be related to the two-step and four-step RACH procedures. Ones skilled in the art will understand that the two-step and four-step RACH procedures will be network slice-specific in case of using the network slice-specific RACH resources and common in case of using the common RACH resource.

The permission (i) may specify that one slice or one subset of network slices of the set of network slices may share its network slice-specific RACH resources with another slice or another subset of network slices of the set of network slices. Subsets of network slices may be, for example, determined based on the application or service category they are related to. In one embodiment, the permission (i) may additionally specify that a certain percentage of a first network slice or a first subset of network slices of the set of network slices may use the network slice-specific RACH resource of a second slice or a second subset of network slices of the set of network slices, while another percentage of the first network slice or the first subset of network slices may use the network slice-specific RACH resource of a third slice or a third subset of network slices of the set of network slices.

The permission (ii) may specify that one slice or one subset of network slices of the set of network slices may share its network slice-specific back-up RACH resources with another slice or another subset of network slices of the set of network slices. Each network slice-specific back-up RACH resource may be guaranteed to be empty and only used in case of a fallback procedure. This enables the network to prioritize successful RACH operation, while prioritizing failed UEs. In some embodiments, two or more subsets of network slices may share the same network slice-specific back-up RACH resource. In some other embodiments, such network slice-specific back-up RACH resources may be provided for specific network slices or subsets of network slices (e.g., high-priority slices only), but to guarantee successful operation this has to be limited. Similar to the permission (i), the permission (ii) may additionally specify that one network slice or one subset of network slices of the set of network slices may use a percentage of a certain back-up RACH resource(s).

The permission (iii) may specify that one network slice or one subset of network slices of the set of network slices may use the whole common RACH resource or its part (a certain percentage thereof) to perform the fallback from the (two-step or four-step) network slice-specific RACH procedure to the (two-step or four-step) common RACH procedure.

Once the network slice-specific RACH policy (policies) or the network slice-specific resource sharing quota(s) is(are) defined, the method 500 proceeds to a step S502, in which the processor 402 provides, by using a wired or wireless connection, the network slice-specific RACH policy (policies) or the network slice-specific resource sharing quota(s) to a RAN node.

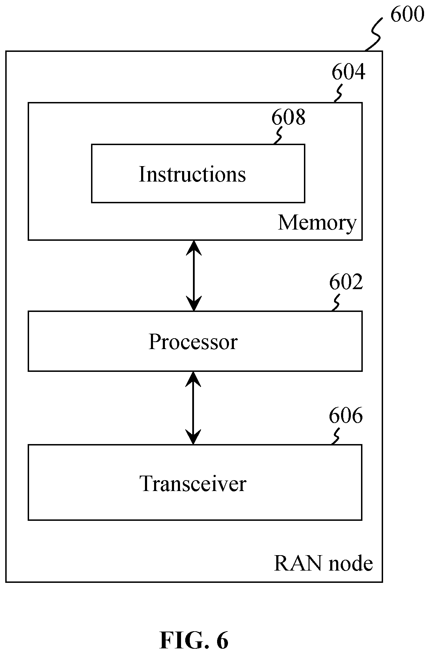

FIG. 6 shows a general block-scheme of a RAN node 600 in accordance with one example embodiment. The RAN node 600 may communicate with the network management entity 400, but the RAN node 600 is deployed not in the CN but in any of the above-described wireless communication networks that supports the above-mentioned network slicing. As shown in FIG. 6, the RAN 600 comprises a processor 602, a memory 604, and a transceiver 606. The memory 604 stores processor-executable instructions 608 which, when executed by the processor 602, cause the processor 602 to implement the aspects of the present disclosure, as will be described below in more detail. It should be noted that the number, arrangement and interconnection of the constructive elements constituting the RAN node 600, which are shown in FIG. 6, are not intended to be any limitation of the present disclosure, but merely used to provide a general idea of how the constructive elements may be implemented within the RAN node 600. In general, the processor 602, the memory 604, and the processor-executable instructions 608 may be implemented in the same or similar manner as the processor 402, the memory 404, and the processor-executable instructions 406, respectively, in the network management entity 400. As for the transceiver 406, in some embodiments, it may be implemented as two individual devices, with one for a receiving operation and another for a transmitting operation. Irrespective of its implementation, the transceiver 406 is intended to be capable of performing different operations required to perform the data reception and transmission, such, for example, as signal modulation/demodulation, encoding/decoding, etc.

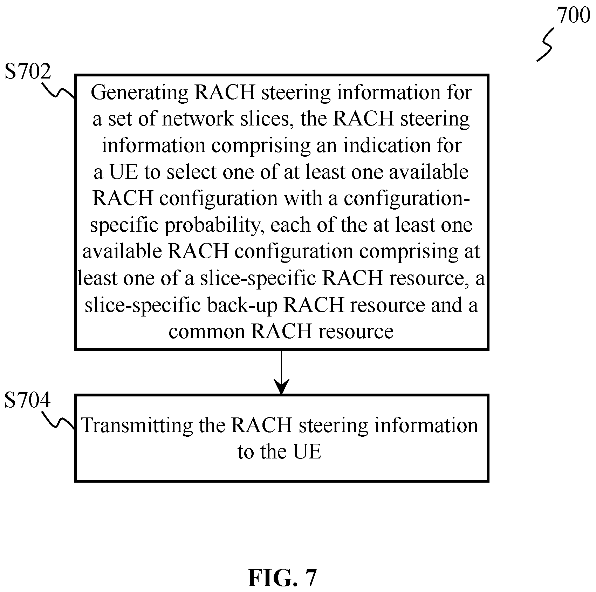

FIG. 7 shows a flowchart of a method 700 for operating the RAN node 600 in accordance with one example embodiment. The method 700 starts with a step S702, in which the processor 602 generates RACH steering information for a set of network slices. The RACH steering information comprises an indication for a UE to select one of at least one available RACH configuration. Each of the at least one available RACH configuration comprises: (i) at least one of a network slice-specific RACH resource, a network slice-specific back-up RACH resource and a common RACH resource; and (ii) a probability with which each of said at least one of the network slice-specific RACH resource, the network slice-specific back-up RACH resource and the common RACH resource is to be used. In one embodiment, the processor 602 may generate the RACH steering information based on the network slice-specific RACH policy (policies) or the network slice-specific resource sharing quota(s) provided from the network management entity 400. In another embodiment, the processor 602 may generate the RACH steering information, for example, based on the following locally available information: a load (i.e., utilization rate of) on the network slice-specific RACH resources among the set of network slices, a load on the network slice-specific back-up RACH resources among the set of network slices, a load on the common RACH resource among the set of network slices, an expected traffic load for each network slice of the set of network slices, or any combination thereof..

Each RACH configuration indicates what RACH resources and in what percentage are to be used for each network slice or each subset of network slices. For example, the UE configuration may indicate that a first subset of network slices of the set of network slices should (not "may" because it is an instruction but not a permission used in the network slice-specific RACH policy) use first four-step network slice-specific RACH resource (hereinafter - the four-step network slice-specific RACH resource-1) with a probability of 30%, second four-step network slice-specific RACH resource (hereinafter - the four-step network slice-specific RACH resource-2) with a probability of 60%, and common four-step common RACH resource with a probability of 10%. It should be also noted that these percentages of the available RACH resources may be presented in the RACH configuration as a uniform distribution between 0 and 99, so that the subrange of 0-29 is used for the four-step network slice-specific RACH resource-1, the subrange of 30-89 is used for the four-step network slice-specific RACH resource-2, and the subrange of 90-99 for the four-step common RACH resource. After the RACH steering information is generated, the method 700 goes on to a step S704, in which the processor 602 transmits the RACH steering information to the UE by using the transceiver 606.

In some embodiments, the processor 602 may transmit the RACH steering information to the UE via a dedicated signaling (e.g., by using RRC messages) or a broadcast signaling (e.g., by using System Information Blocks (SIBs)). In one other possible embodiment, the processor 602 may integrate the RACH steering information into the UAC framework used in a SIB 1 (SIB1). Currently there is a parameter for access barring for each access category with the UAC framework, but the access barring is used to simply postpone the access of some UEs. Instead of barring the access, it is possible to introduce a new UAC parameter to steer the UE to different RACH resources.

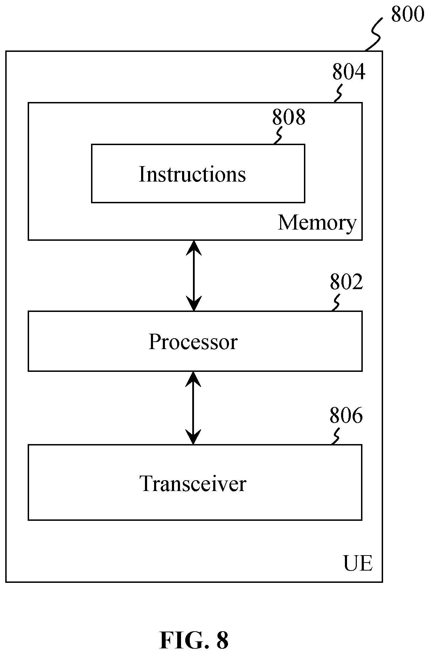

FIG. 8 shows a general block-scheme of a UE 800 in accordance with one example embodiment. The UE 800 may communicate with the RAN 600 and (indirectly) with the network management entity 400, and the UE 800 is assumed to be in any of the above-described wireless communication networks that supports the above-mentioned network slicing. As shown in FIG. 8, the UE 800 comprises a processor 802, a memory 804, and a transceiver 806. The memory 804 stores processor-executable instructions 808 which, when executed by the processor 802, cause the processor 802 to implement the aspects of the present disclosure, as will be described below in more detail. It should be noted that the number, arrangement and interconnection of the constructive elements constituting the UE 800, which are shown in FIG. 8, are not intended to be any limitation of the present disclosure, but merely used to provide a general idea of how the constructive elements may be implemented within the UE 800. In general, the processor 802, the memory 804, and the processor-executable instructions 808 may be implemented in the same or similar manner as the processor 402, the memory 404, and the processor-executable instructions 406, respectively, in the network management entity 400. As for the transceiver 806, it may be implemented in the same or similar manner as the transceiver 606 in the RAN node 600.

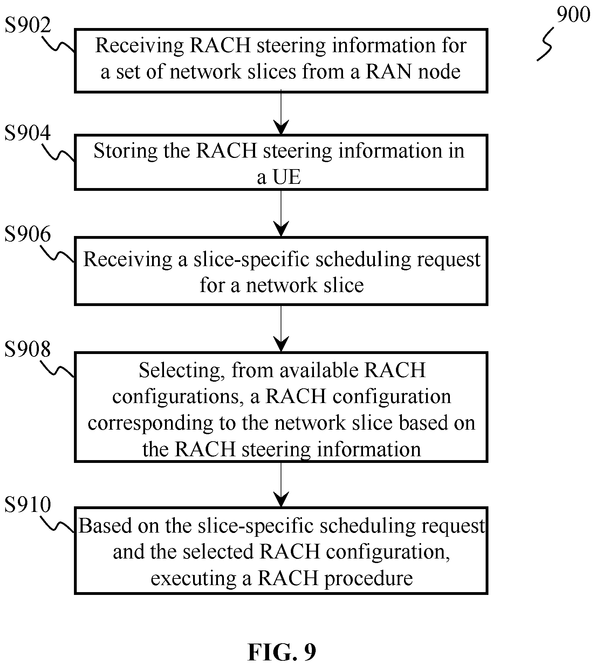

FIG. 9 shows a flowchart of a method 900 for operating the UE 800 in accordance with one example embodiment. The method 900 starts with a step S902, in which the processor 802 receives, by using the transceiver 806, the RACH steering information for the set of network slices from the RAN node 600. As noted above, the RACH steering information may be received from the RAN node 600 via the broadcast (e.g., UAC parameters) or dedicated (e.g., RRC messages) signaling. Then, the method 900 proceeds to a step S904, in which the processor 802 stores the RACH steering information in the memory 804. After that, the method 900 goes on to a step S906, in which the processor 802 receives, by using the transceiver 806, a network slice-specific scheduling request for a certain network slice of the set of network slices. Further, a next step S908 is initiated, which the processor 802 selects, from the available RACH configurations previously signaled to the UE 900 from the RAN node 600, a RACH configuration corresponding to the network slice based on the RACH steering information. The step S908 may be performed by using a random number generator in accordance with the RACH steering information. Next, the method 900 proceeds to a step S910, in which the processor 802 uses the network slice-specific scheduling request and the selected RACH configuration to execute a RACH procedure for the network slice.

In one embodiment, the method 900 may comprise an additional step after the step S910, in which the processor 802 generates a UE report that comprises: an indication of the selected RACH configuration; an execution duration of the selected RACH procedure; and an indication of whether the UE has experienced a RACH configuration-related collision during the RACH procedure. For example, the RACH configuration-related collision may occur if the processor 800 has not received a message B in time during the two-step RACH procedure, or if the UE has not received a message MSG4 in time during the four-step RACH procedure. When the UE report is generated, the processor 802 may then cause the transceiver 806 to transmit the UE report to the RAN node 600. In one embodiment, the RAN node 600 may either forward the UE report to the network management entity 400 for further analysis. By using such a UE report, the network management entity 400 may collect management data analytics, so that it can determine whether it is required to optimize the network slice-specific RACH policy (policies) or the network slice-specific resource sharing quota(s) and, consequently, the RACH steering information to improve network slice-specific RACH performance. In another embodiment, the RAN node 600 may analyze the UE report by itself to decide whether a change to the RACH steering information is required.

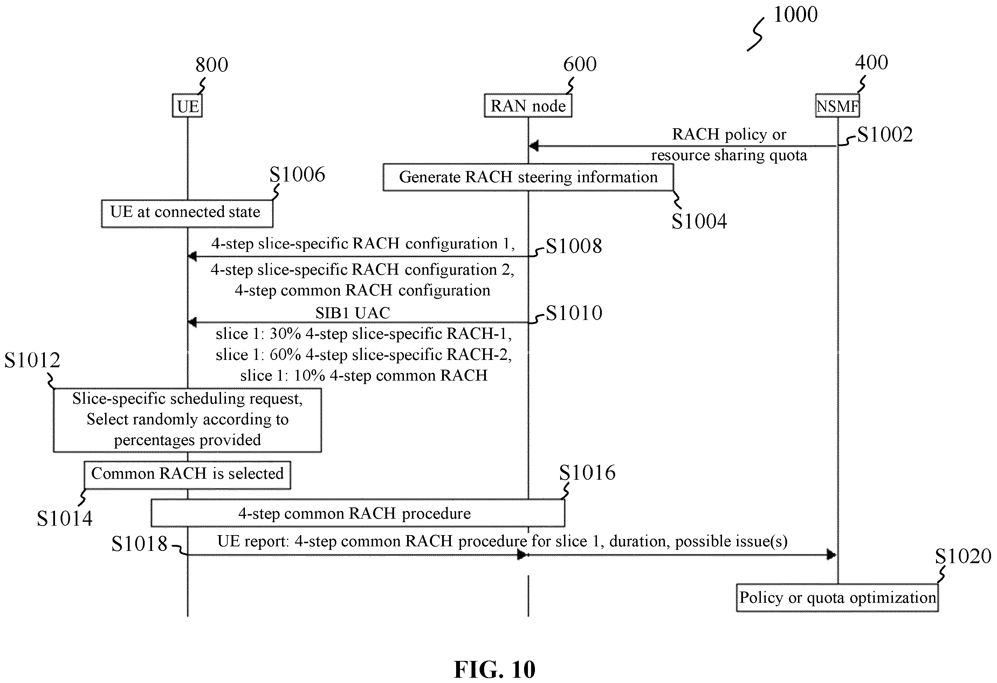

FIG. 10 shows an interaction diagram 1000 that explains the interaction between the network management entity 400 (implemented as an NSMF), the RAN node 600, and the UE 800 in accordance with one example embodiment. The interaction diagram 1000 starts with a step S1002, in which the NSMF 400 generates the network slice-specific RACH policy or the network slice-specific resource sharing quota in accordance with the method 500 and transmits the network slice-specific RACH policy or the network slice-specific resource sharing quota to the RAN node 600. Next, in a step S1004, the RAN node 600 generates the RACH steering information for the UE 800 based on the received network slice-specific RACH policy or network slice-specific resource sharing quota in accordance with the method 700. In the embodiment shown in FIG. 10, it is assumed that the RAN node 600 prepares a four-step network slice-specific RACH configuration for slice 1 (hereinafter - four-step slice-specific RACH configuration 1), a four-step network slice-specific RACH configuration for slice 2 (hereinafter - four-step slice-specific RACH configuration 2), and a four-step common RACH configuration. Each of these RACH configurations indicates the RACH resources and RACH parameters to be used by the UE 800. The RAN node 600 may inform the UE 800 about the RACH configurations in a next step S1008. At the same time, the RACH steering information itself is assumed to be integrated into SIB1 UAC parameters which are then transmitted to the UE 800 in a next step S1010. As shown in FIG. 10, the RACH steering information indicates that the UE 800 should use, for network slice 1, own RACH resource with a probability of 30% (30% RACH-1), RACH resource of slice 2 with a probability of 60% (60% RACH-2), and common RACH resource with a probability of 10% (10% common RACH). In other words, for network slice 1, the UE 800 should use RACH-1 30% of its time, RACH-2 60% of its time, and the common RACH 10% of its time. After that, the interaction diagram 1000 proceeds to a step S1012, in which the UE 800 is assumed to receive a network slice-specific scheduling request (e.g., an MO traffic) and, in response to the request, randomly selects one of the RACH resources and, correspondingly, RACH configurations, considering the percentages provided in the RACH steering information. For example, if the available RACH resources for slice 1 (i.e., 30% RACH-1, 60% RACH-2, and 10% common RACH) are again presented as a uniform distribution from 0 to 99, then UE 800 may randomly draw a number between 0 and 99 by using the random number generator, thereby selecting the corresponding RACH resources (and RACH configuration) where the selected number maps onto. As such a distribution is uniform, the size of the sub-ranges (i.e., "0-29", "30-89", and "90-99") implies the likelihood or probability of selecting that RACH configuration. In the embodiment shown in FIG. 10, the UE 800 selects the common RACH resource in a step S1014. Further, the interaction diagram 1000 goes on to a step S1016, in which the UE 800 executes the four-step common RACH procedure based on the selected common RACH resource and the network slice-specific scheduling request. Once the step S1016 is finished, i.e., the four-step common RACH procedure is executed successfully, the interaction diagram 1000 proceeds to a step S1018, in which the UE 800 prepares its report. The UE report is transmitted to the NSMF 400 via the RAN node 600 in a next step S1018. The interaction diagram 1000 ends up with a step S1020, in which the NSMF 400 decides whether to optimize or modify the network slice-specific RACH policy or the network slice-specific resource sharing quota based on the UE report.

It should be noted that each step or operation of the methods 500, 700, 900 and the interaction diagram 1000, or any combinations of the steps or operations, can be implemented by various means, such as hardware, firmware, and/or software. As an example, one or more of the steps or operations described above can be embodied by processor executable instructions, data structures, program modules, and other suitable data representations. Furthermore, the processor-executable instructions which embody the steps or operations described above can be stored on a corresponding data carrier and executed by the processors 402, 602 and 802, respectively. This data carrier can be implemented as any computer-readable storage medium configured to be readable by said at least one processor to execute the processor executable instructions. Such computer-readable storage media can include both volatile and nonvolatile media, removable and non-removable media. By way of example, and not limitation, the computer-readable media comprise media implemented in any method or technology suitable for storing information. In more detail, the practical examples of the computer-readable media include, but are not limited to information-delivery media, RAM, ROM, EEPROM, flash memory or other memory technology, CD-ROM, digital versatile discs (DVD), holographic media or other optical disc storage, magnetic tape, magnetic cassettes, magnetic disk storage, and other magnetic storage devices.

Although the example embodiments of the present disclosure are described herein, it should be noted that any various changes and modifications could be made in the embodiments of the present disclosure, without departing from the scope of legal protection which is defined by the appended claims. In the appended claims, the word "comprising" does not exclude other elements or operations, and the indefinite article "a" or "an" does not exclude a plurality. The mere fact that certain measures are recited in mutually different dependent claims does not indicate that a combination of these measures cannot be used to advantage.

## Claims

1. A Radio Access Network, RAN, node (600), the RAN node (600) comprising:
means (602) for generating Random Access Channel, RACH, steering information for a set of network slices supported in a wireless communication network, the RACH steering information comprising an indication for a User Equipment, UE, (800) to select one of at least one available RACH configuration, each of the at least one available RACH configuration comprising:
at least one of a network slice-specific RACH resource, a network slice-specific back-up RACH resource and a common RACH resource; and
a probability with which each of said at least one of the network slice-specific RACH resource, the network slice-specific back-up RACH resource and the common RACH resource is to be used; and
means (606) for transmitting the RACH steering information to the UE (800).

2. The RAN node (600) of claim 1, wherein each of the at least one available RACH configuration causes the UE (800) to:
- share, at least partly, the network slice-specific RACH resource of at least one network slice of the set of network slices with at least one other network slice of the set of network slices; and/or
- share, at least partly, the network slice-specific back-up RACH resource of at least one network slice of the set of network slices with at least one other network slice of the set of network slices; and/or
- use, at least partly, the common RACH resource for at least one network slice of the set of network slices when a RACH fallback procedure is initiated for the at least one network slice.

3. The RAN node (600) of claim 1 or 2, wherein the RAN node (600) further comprises means (606) for receiving at least one network slice-specific RACH policy for the set of network slices from a network management entity (400), and means (602) for generating the RACH steering information based on the at least one network slice-specific RACH policy.

4. The RAN node (600) of claim 1 or 2, wherein to the RAN node (600) further comprises means (606) for receiving at least one network slice-specific resource sharing quota for the set of network slices from a network management entity (400), and means (602) for generating the RACH steering information based on the at least one network slice-specific resource sharing quota.

5. The RAN node (600) of claim 3 or 4, wherein the RAN node (600) further comprises:
means (606) for receiving a UE report from the UE (800), the UE report comprising:
- an indication of a RACH configuration selected among the at least one available RACH configuration based on the RACH steering information;
- an execution duration of a RACH procedure based on the selected RACH configuration; and
- an indication of whether the UE (800) has experienced a RACH configuration-related collision during the RACH procedure; and
means (606) for forwarding the UE report to the network management entity (400).

6. The RAN node (600) of claim 1 or 2, wherein the RACH steering information is generated based on at least one of:
- a load on the network slice-specific RACH resources among the set of network slices;
- a load on the network slice-specific back-up RACH resources among the set of network slices;
- a load on the common RACH resource among the set of network slices; or
- an expected traffic load for each network slice of the set of network slices.

7. The RAN node (600) of claim 6, wherein to the RAN node (600) further comprises:
means (606) for receiving a UE report from the UE (800), the UE report comprising:
- an indication of a RACH configuration selected among the at least one available RACH configuration based on the RACH steering information;
- an execution duration of a RACH procedure based on the selected RACH configuration; and
- an indication of whether the UE (800) has experienced a RACH configuration-related collision during the RACH procedure; and
means (602) for, based on the UE report, deciding whether to modify the RACH steering information.

8. The RAN node (600) of any one of claims 1 to 7, wherein the RAN node (600) further comprises means (602) for encoding the RACH steering information into a set of Unified Access Control (UAC) parameters, and means (606) for transmitting the set of UAC parameters to the UE (800) via the broadcast signaling.

9. A network management entity (400), the network management entity (400) comprising:
means (402) for generating, for a set of network slices supported in a wireless communication network, at least one network slice-specific Random Access Channel, RACH, policy or at least one network slice-specific resource sharing quota such that a Radio Access Network, RAN, node (600) is able to generate RACH steering information for a User Equipment, UE, (800) based on the at least one network slice-specific RACH policy or the at least one network slice-specific resource sharing quota, the RACH steering information comprising an indication for the UE (800) to select one of at least one available RACH configuration, each of the at least one available RACH configuration comprising:
at least one of a network slice-specific RACH resource, a network slice-specific back-up RACH resource and a common RACH resource; and
a probability with which each of said at least one of the network slice-specific RACH resource, the network slice-specific back-up RACH resource and the common RACH resource is to be used; and
means (402) for providing the at least one network slice-specific RACH policy or the at least one network slice-specific resource sharing quota to the RAN node (600).

10. The network management entity (400) of claim 9, wherein the network management entity (400) further comprises:
means (402) for receiving a UE report from the RAN node (600), the UE report comprising:
- an indication of a RACH configuration selected among the at least one available RACH configuration based on the RACH steering information;
- an execution duration of a RACH procedure based on the selected RACH configuration; and
- an indication of whether the UE (800) has experienced a RACH configuration-related collision during the RACH procedure; and
means (402) for, based on the UE report, deciding whether to modify the at least one network slice-specific RACH policy or the at least one network slice-specific resource sharing quota.

11. A User Equipment, UE, (800), the UE (800) comprising:
means (806) for receiving, from a Radio Access Network, RAN, node (600), Random Access Channel, RACH, steering information for a set of network slices supported in a wireless communication network, the RACH steering information comprising an indication for the UE (800) to select one of at least one available RACH configuration, each of the at least one available RACH configuration comprising:
at least one of a network slice-specific RACH resource, a network slice-specific back-up RACH resource and a common RACH resource; and
a probability with which each of said at least one of the network slice-specific RACH resource, the network slice-specific back-up RACH resource and the common RACH resource is to be used;
means (806) for receiving a network slice-specific scheduling request for a network slice of the set of network slices;
means (802) for selecting, from the at least one available RACH configuration, a RACH configuration corresponding to the network slice based on the RACH steering information; and
means (802) for executing, based on the network slice-specific scheduling request and the selected RACH configuration, a RACH procedure for the network slice.

12. The UE (800) of claim 11, wherein each of the at least one available RACH configuration causes the UE (800) to:
- share, at least partly, the network slice-specific RACH resource of at least one network slice of the set of network slices with at least one other network slice of the set of network slices; and/or
- share, at least partly, the network slice-specific back-up RACH resource of at least one network slice of the set of network slices with at least one other network slice of the set of network slices; and/or
- use, at least partly, the common RACH resource for at least one network slice of the set of network slices when a RACH fallback procedure is initiated for the at least one network slice.

13. The UE (800) of claim 11 or 12, wherein the RACH steering information is encoded into a set of Unified Access Control (UAC) parameters, and wherein the UE (800) further comprises means (806) for receiving the set of UAC parameters via the broadcast signaling.

14. The UE (800) of any one of claims 11 to 13, wherein the UE (800) further comprises:
means (802) for generating a UE report after the RACH procedure is executed by using the selected RACH configuration, the UE report comprising:
- an indication of the selected RACH configuration;
- an execution duration of the RACH procedure based on the selected RACH configuration; and
- an indication of whether the UE (800) has experienced a RACH configuration-related collision during the RACH procedure; and
means (806) for transmitting the UE report to the RAN node (600).

15. The UE (800) of any one of claims 11 to 14, wherein the RACH configuration corresponding to the network slice comprises at least two of the network slice-specific RACH resource, the network slice-specific back-up RACH resource and the common RACH resource, and the probabilities of said at least two of the network slice-specific RACH resource, the network slice-specific back-up RACH resource and the common RACH resource are presented as a uniform distribution between 0 and 99, and wherein the UE (800) further comprises means (802) for selecting, in the RACH configuration corresponding to the network slice, a RACH resource from among said at least two of the network slice-specific RACH resource, the network slice-specific back-up RACH resource and the common RACH resource by using a random number generator, and wherein the RACH procedure is executed based on the selected RACH resource.

## Patentansprüche

1. Radio Access Network, RAN, Knoten (600), wobei der RAN-Knoten (600) umfasst:
Mittel (602) zum Erzeugen von Random Access Channel, RACH, Lenkungsinformationen für eine Menge von Netzwerk-Slices, die in einem drahtlosen Kommunikationsnetzwerk unterstützt werden, wobei die RACH-Lenkungsinformationen eine Angabe für ein User Equipment, UE, (800) zum Auswählen einer von mindestens einer verfügbaren RACH-Konfiguration umfassen, wobei jede von der mindestens einen verfügbaren RACH-Konfiguration umfasst:
mindestens eines von einer netzwerk-slice-spezifischen RACH-Ressource, einer netzwerk-slice-spezifischen Reserve-RACH-Ressource und einer gemeinsamen RACH-Ressource; und
eine Wahrscheinlichkeit, mit der jede von der mindestens einen von der netzwerk-slice-spezifischen RACH-Ressource, der netzwerk-slice-spezifischen Reserve-RACH-Ressource und der gemeinsamen RACH-Ressource zu verwenden ist; und
Mittel (606) zum Senden der RACH-Lenkungsinformationen an das UE (800).

2. RAN-Knoten (600) nach Anspruch 1, wobei jede von der mindestens einen verfügbaren RACH-Konfiguration das UE (800) veranlasst zum:
- Teilen, zumindest teilweise, der netzwerk-slice-spezifischen RACH-Ressource von mindestens einem Netzwerk-Slice von der Menge von Netzwerk-Slices mit mindestens einem anderen Netzwerk-Slice von der Menge von Netzwerk-Slices; und/oder
- Teilen, zumindest teilweise, der netzwerk-slice-spezifischen Reserve-RACH-Ressource von mindestens einem Netzwerk-Slice von der Menge von Netzwerk-Slices mit mindestens einem anderen Netzwerk-Slice von der Menge von Netzwerk-Slices; und/oder
- Verwenden, zumindest teilweise, der gemeinsamen RACH-Ressource für mindestens ein Netzwerk-Slice von der Menge von Netzwerk-Slices, wenn eine RACH-Fallback-Prozedur für das mindestens eine Netzwerk-Slice eingeleitet wird.

3. RAN-Knoten (600) nach Anspruch 1 oder 2, wobei der RAN-Knoten (600) ferner Mittel (606) zum Empfangen mindestens einer netzwerk-slice-spezifischen RACH-Richtlinie für die Menge von Netzwerk-Slices von einer Netzwerkverwaltungsentität (400) und Mittel (602) zum Erzeugen der RACH-Lenkungsinformationen auf der Grundlage der mindestens einen netzwerk-slice-spezifischen RACH-Richtlinie umfasst.

4. RAN-Knoten (600) nach Anspruch 1 oder 2, wobei der RAN-Knoten (600) ferner Mittel (606) zum Empfangen mindestens einer netzwerk-slice-spezifischen Ressourcenteilungsquote für die Menge von Netzwerk-Slices von einer Netzwerkverwaltungsentität (400) und Mittel (602) zum Erzeugen der RACH-Lenkungsinformationen auf der Grundlage der mindestens einen netzwerk-slice-spezifischen Ressourcenteilungsquote umfasst.

5. RAN-Knoten (600) nach Anspruch 3 oder 4, wobei der RAN-Knoten (600) ferner umfasst:
Mittel (606) zum Empfangen eines UE-Berichts von dem UE (800), wobei der UE-Bericht umfasst:
- eine Angabe einer RACH-Konfiguration, die unter der mindestens einen verfügbaren RACH-Konfiguration auf der Grundlage der RACH-Lenkungsinformationen ausgewählt wurde;
- eine Ausführungsdauer einer RACH-Prozedur auf der Grundlage der ausgewählten RACH-Konfiguration; und
- eine Angabe, ob bei dem UE (800) eine RACH-konfigurationsbezogene Kollision während der RACH-Prozedur aufgetreten ist; und
Mittel (606) zum Weiterleiten des UE-Berichts an die Netzwerkwerkverwaltungsentität (400).

6. RAN-Knoten (600) nach Anspruch 1 oder 2, wobei die RACH-Lenkungsinformationen erzeugt werden auf der Grundlage von mindestens einem von:
- einer Last auf den netzwerk-slice-spezifischen RACH-Ressourcen unter der Menge von Netzwerk-Slices;
- einer Last auf den netzwerk-slice-spezifischen Reserve-RACH-Ressourcen unter der Menge von Netzwerk-Slices;
- einer Last auf der gemeinsamen RACH-Ressource unter der Menge von Netzwerk-Slices; oder
- einer erwarteten Verkehrslast für jedes Netzwerk-Slice von der Menge von Netzwerk-Slices.

7. RAN-Knoten (600) nach Anspruch 6, wobei der RAN-Knoten (600) ferner umfasst:
Mittel (606) zum Empfangen eines UE-Berichts von den UE (800), wobei der UE-Bericht umfasst:
- eine Angabe einer RACH-Konfiguration, die unter der mindestens einen verfügbaren RACH-Konfiguration auf der Grundlage der RACH-Lenkungsinformationen ausgewählt wurde;
- eine Ausführungsdauer einer RACH-Prozedur auf der Grundlage der ausgewählten RACH-Konfiguration; und
- eine Angabe, ob bei dem UE (800) während der RACH-Prozedur eine RACH-konfigurationsbezogene Kollision aufgetreten ist; und
Mittel (602) zum Entscheiden, auf der Grundlage des UE-Berichts, ob die RACH-Lenkungsinformationen zu ändern sind.

8. RAN-Knoten (600) nach einem der Ansprüche 1 bis 7, wobei der RAN-Knoten (600) ferner Mittel (602) zum Codieren der RACH-Lenkungsinformationen in eine Menge von Unified Access Control (UAC) Parametern und Mittel (606) zum Senden der Menge von UAC-Parametern an das UE (800) über die Broadcast-Signalisierung umfasst.

9. Netzwerkverwaltungsentität (400), wobei die Netzwerkverwaltungsentität (400) umfasst:
Mittel (402) zum Erzeugen, für eine Menge von Netzwerk-Slices, die in einem drahtlosen Kommunikationsnetzwerk unterstützt werden, mindestens einer netzwerk-slice-spezifischen Random Access Channel, RACH, Richtlinie oder mindestens einer netzwerk-slice-spezifischen Ressourcenteilungsquote, derart dass ein Radio Access Network, RAN, Knoten (600) in der Lage ist, RACH-Lenkungsinformationen für ein User Equipment, UE, (800) auf der Grundlage der mindestens einen netzwerk-slice-spezifischen RACH-Richtlinie oder der mindestens einen netzwerk-slice-spezifischen Ressourcenteilungsquote zu erzeugen, wobei die RACH-Lenkungsinformationen eine Angabe für das UE (800) zum Auswählen mindestens einer verfügbaren RACH-Konfiguration umfassen, wobei jede von der mindestens einen verfügbaren RACH-Konfiguration umfasst:
mindestens eine von einer netzwerk-slice-spezifischen RACH-Ressource, einer netzwerk-slice-spezifischen Reserve-RACH-Ressource und einer gemeinsamen RACH-Ressource; und
eine Wahrscheinlichkeit, mit der jede von der mindestens einen von der netzwerk-slice-spezifischen RACH-Ressource, der netzwerk-slice-spezifischen Reserve-RACH-Ressource und der gemeinsamen RACH-Ressource zu verwenden ist; und
Mittel (402) zum Bereitstellen der mindestens einen netzwerk-slice-spezifischen RACH-Richtlinie oder der mindestens einen netzwerk-slice-spezifischen Ressourcenteilungsquote für den RAN-Knoten (600).

10. Netzwerkverwaltungsentität (400) nach Anspruch 9, wobei die Netzwerkverwaltungsentität (400) ferner umfasst:
Mittel (402) zum Empfangen eines UE-Berichts von dem RAN-Knoten (600), wobei der UE-Bericht umfasst:
- eine Angabe einer RACH-Konfiguration, die unter der mindestens einen verfügbaren RACH-Konfiguration auf der Grundlage der RACH-Lenkungsinformationen ausgewählt wurde;
- eine Ausführungsdauer einer RACH-Prozedur auf der Grundlage der ausgewählten RACH-Konfiguration; und
- eine Angabe, ob bei dem UE (800) eine RACH-konfigurationsbezogene Kollision während der RACH-Prozedur aufgetreten ist; und
Mittel (402) zum Entscheiden, auf der Grundlage des UE-Berichts, ob die mindestens eine netzwerk-slice-spezifische RACH-Richtlinie oder die mindestens eine netzwerk-slice-spezifische Ressourcenteilungsquote zu ändern ist.

11. User Equipment, UE, (800), wobei das UE (800) umfasst:
Mittel (806) zum Empfangen, von einem Radio Access Network, RAN, Knoten (600) von Random Access Channel, RACH, Lenkungsinformationen für eine Menge von Netzwerk-Slices, die in einem drahtlosen Kommunikationsnetzwerk unterstützt werden, wobei die RACH-Lenkungsinformationen eine Angabe für das UE (800) zum Auswählen mindestens einer von mindestens einer verfügbaren RACH-Konfiguration umfassen, wobei jede von der mindestens einen verfügbaren RACH-Konfiguration umfasst:
mindestens eine von einer netzwerk-slice-spezifischen RACH-Ressource, einer netzwerk-slice-spezifischen Reserve-RACH-Ressource und einer gemeinsamen RACH-Ressource; und
eine Wahrscheinlichkeit, mit der jede von der mindestens einen von der netzwerk-slice-spezifischen RACH-Ressource, der netzwerk-slice-spezifischen Reserve-RACH-Ressource und der gemeinsamen RACH-Ressource zu verwenden ist;
Mittel (806) zum Empfangen einer netzwerk-slice-spezifischen Planungsanforderung für ein Netzwerk-Slice von der Menge von Netzwerk-Slices;
Mittel (802) zum Auswählen, von der mindestens einen verfügbaren RACH-Konfiguration, einer RACH-Konfiguration, die dem Netzwerk-Slice entspricht, auf der Grundlage der RACH-Lenkungsinformationen; und
Mittel (802) zum Ausführen, auf der Grundlage der netzwerk-slice-spezifischen Planungsanforderung und der ausgewählten RACH-Konfiguration, einer RACH-Prozedur für das Netzwerk-Slice.

12. UE (800) nach Anspruch 11, wobei jede von der mindestens einen verfügbaren RACH-Konfiguration das UE (800) veranlasst zum:
- Teilen, zumindest teilweise, der netzwerk-slice-spezifischen RACH-Ressource des mindestens einen Netzwerk-Slices von der Menge von Netzwerk-Slices mit mindestens einem anderen Netzwerk-Slice von der anderen Menge von Netzwerk-Slices; und/oder
- Teilen, zumindest teilweise, der netzwerk-slice-spezifischen Reserve-RACH-Ressource von mindestens einem Netzwerk-Slice von der Menge von Netzwerk-Slices mit mindestens einem anderen Netzwerk-Slice von der Menge von Netzwerk-Slices; und/oder
- Verwenden, zumindest teilweise, der gemeinsamen RACH-Ressource für mindestens ein Netzwerk-Slice von der Menge von Netzwerk-Slices, wenn eine RACH-Fallback-Prozedur für das mindestens eine Netzwerk-Slice eingeleitet wird.

13. UE (800) nach Anspruch 11 oder 12, wobei die RACH-Lenkungsinformationen in eine Menge von Unified Access Control (UAC) Parametern codiert werden, und wobei das UE (800) ferner Mittel (806) zum Empfangen der Menge von UAC-Parametern über die Broadcast-Signalisierung umfasst.

14. UE (800) nach einem der Ansprüche 11 bis 13, wobei das UE (800) ferner umfasst:
Mittel (802) zum Erzeugen eines UE-Berichts, nachdem die RACH-Prozedur unter Verwendung der ausgewählten RACH-Konfiguration ausgeführt wurde, wobei der UE-Bericht umfasst:
- eine Angabe der ausgewählten RACH-Konfiguration;
- eine Ausführungsdauer einer RACH-Prozedur auf der Grundlage der ausgewählten RACH-Konfiguration; und
- eine Angabe, ob bei dem UE (800) eine RACH-konfigurationsbezogene Kollision während der RACH-Prozedur aufgetreten ist; und
Mittel (806) zum Senden des UE-Berichts an den RAN-Knoten (600).

15. UE (800) nach einem der Ansprüche 11 bis 14, wobei die RACH-Konfiguration, die dem Netzwerk-Slice entspricht, mindestens zwei von der netzwerk-slice-spezifischen RACH-Ressource, der netzwerk-slice-spezifischen Reserve-RACH-Ressource und der gemeinsamen RACH-Ressource umfasst, und die Wahrscheinlichkeiten der mindestens zwei von der netzwerk-slice-spezifischen RACH-Ressource, der netzwerk-slice-spezifischen Reserve-RACH-Ressource und der gemeinsamen RACH-Ressource als eine Gleichverteilung zwischen 0 und 99 dargestellt werden, und wobei das UE (800) ferner Mittel (802) zum Auswählen, in der RACH-Konfiguration, die dem Netzwerk-Slice entspricht, einer RACH-Ressource unter den mindestens zwei von der netzwerk-slice-spezifischen RACH-Ressource, der netzwerk-slice-spezifischen Reserve-RACH-Ressource und der gemeinsamen RACH-Ressource unter Verwendung eines Zufallszahlengenerators umfasst, und wobei die RACH-Prozedur auf der Grundlage der ausgewählten RACH-Ressource ausgeführt wird.

## Revendications

1. Nœud de réseau d'accès radio, RAN, (600), le nœud RAN (600) comprenant :
des moyens (602) pour générer des informations d'orientation de canal d'accès aléatoire, RACH, pour un ensemble de tranches de réseau prises en charge dans un réseau de communication sans fil, les informations d'orientation RACH comprenant une indication pour qu'un équipement utilisateur, UE, (800) sélectionne l'une d'une ou plusieurs configurations RACH disponibles, chacune des une ou plusieurs configurations RACH disponibles comprenant :
une ou plusieurs parmi une ressource RACH spécifique à une tranche de réseau, une ressource RACH de secours spécifique à une tranche de réseau et une ressource RACH commune ; et
une probabilité avec laquelle chacune desdites une ou plusieurs parmi la ressource RACH spécifique à une tranche de réseau, la ressource RACH de secours spécifique à une tranche de réseau et la ressource RACH commune doit être utilisée ; et
des moyens (606) pour transmettre les informations d'orientation RACH à l'UE (800).

2. Nœud RAN (600) selon la revendication 1, dans lequel chacune des une ou plusieurs configurations RACH disponibles amène l'UE (800) à :
- partager, au moins en partie, la ressource RACH spécifique à une tranche de réseau d'au moins une tranche de réseau de l'ensemble de tranches de réseau avec au moins une autre tranche de réseau de l'ensemble de tranches de réseau ; et/ou
- partager, au moins en partie, la ressource RACH de secours spécifique à une tranche de réseau d'au moins une tranche de réseau de l'ensemble de tranches de réseau avec au moins une autre tranche de réseau de l'ensemble de tranches de réseau ; et/ou
- utiliser, au moins en partie, la ressource RACH commune pour au moins une tranche de réseau de l'ensemble de tranches de réseau lorsqu'une procédure de repli RACH est initiée pour l'au moins une tranche de réseau.

3. Nœud RAN (600) selon la revendication 1 ou 2, dans lequel le nœud RAN (600) comprend en outre des moyens (606) pour recevoir d'une entité de gestion de réseau (400) au moins une politique RACH spécifique à une tranche de réseau pour l'ensemble de tranches de réseau, et des moyens (602) pour générer les informations d'orientation RACH sur la base de l'au moins une politique RACH spécifique à une tranche de réseau.

4. Nœud RAN (600) selon la revendication 1 ou 2, dans lequel le nœud RAN (600) comprend en outre des moyens (606) pour recevoir d'une entité de gestion de réseau (400) au moins un quota de partage de ressources spécifique à une tranche de réseau pour l'ensemble de tranches de réseau, et des moyens (602) pour générer les informations d'orientation RACH sur la base de l'au moins un quota de partage de ressources spécifique à une tranche de réseau.

5. Nœud RAN (600) selon la revendication 3 ou 4, dans lequel le nœud RAN (600) comprend en outre :
des moyens (606) pour recevoir de l'UE (800) un rapport d'UE, le rapport d'UE comprenant :
- une indication d'une configuration RACH sélectionnée parmi les une ou plusieurs configurations RACH disponibles sur la base des informations d'orientation RACH ;
- une durée d'exécution d'une procédure RACH sur la base de la configuration RACH sélectionnée ; et
- une indication précisant si l'UE (800) a subi une collision liée à la configuration RACH pendant la procédure RACH ; et
des moyens (606) pour transférer le rapport d'UE à l'entité de gestion de réseau (400).

6. Nœud RAN (600) selon la revendication 1 ou 2, dans lequel les informations d'orientation RACH sont générées sur la base d'au moins une parmi :
- une charge sur les ressources RACH spécifique à une tranche de réseau parmi l'ensemble de tranches de réseau ;
- une charge sur les ressources RACH de secours spécifiques à une tranche de réseau parmi l'ensemble de tranches de réseau ;
- une charge sur la ressource RACH commune parmi l'ensemble de tranches de réseau ; ou
- une charge de trafic attendue pour chaque tranche de réseau de l'ensemble de tranches de réseau.

7. Nœud RAN (600) selon la revendication 6, dans lequel le nœud RAN (600) comprend en outre :
des moyens (606) pour recevoir de l'UE (800) un rapport d'UE, le rapport d'UE comprenant :
- une indication d'une configuration RACH sélectionnée parmi les une ou plusieurs configurations RACH disponibles sur la base des informations d'orientation RACH ;
- une durée d'exécution d'une procédure RACH sur la base de la configuration RACH sélectionnée ; et
- une indication précisant si l'UE (800) a subi une collision liée à la configuration RACH pendant la procédure RACH ; et
des moyens (602) pour, sur la base du rapport d'UE, décider s'il faut de modifier les informations d'orientation RACH.

8. Nœud RAN (600) selon l'une des revendications 1 à 7, dans lequel le nœud RAN (600) comprend en outre des moyens (602) pour coder les informations d'orientation RACH en un ensemble de paramètres de contrôle d'accès unifié (UAC), et des moyens (606) pour transmettre l'ensemble de paramètres UAC à l'UE (800) via la signalisation de diffusion.

9. Entité de gestion de réseau (400), l'entité de gestion de réseau (400) comprenant :
des moyens (402) pour générer, pour un ensemble de tranches de réseau prises en charge dans un réseau de communication sans fil, au moins une politique de canal d'accès aléatoire, RACH, spécifique à une tranche de réseau ou au moins un quota de partage de ressources spécifique à une tranche de réseau, de sorte qu'un nœud de réseau d'accès radio, RAN, (600) soit capable de générer des informations d'orientation RACH pour un équipement utilisateur, UE, (800) sur la base de l'au moins une politique RACH spécifique à une tranche de réseau ou de l'au moins un quota de partage de ressources spécifique à une tranche de réseau, les informations d'orientation RACH comprenant une indication pour que l'UE (800) sélectionne l'une d'une ou plusieurs configurations RACH disponibles, chacune des une ou plusieurs configurations RACH disponibles comprenant :
une ou plusieurs parmi une ressource RACH spécifique à une tranche de réseau, une ressource RACH de secours spécifique à une tranche de réseau et une ressource RACH commune ; et
une probabilité avec laquelle chacune desdites une ou plusieurs parmi la ressource RACH spécifique à une tranche de réseau, la ressource RACH de secours spécifique à une tranche de réseau et la ressource RACH commune doit être utilisée ; et
des moyens (402) pour fournir l'au moins une politique RACH spécifique à une tranche de réseau ou l'au moins un quota de partage de ressources spécifique à une tranche de réseau au nœud RAN (600).

10. Entité de gestion de réseau (400) selon la revendication 9, dans laquelle l'entité de gestion de réseau (400) comprend en outre :
des moyens (402) pour recevoir du nœud RAN (600) un rapport d'UE, le rapport d'UE comprenant :
- une indication d'une configuration RACH sélectionnée parmi les une ou plusieurs configurations RACH disponibles sur la base des informations d'orientation RACH ;
- une durée d'exécution d'une procédure RACH sur la base de la configuration RACH sélectionnée ; et
- une indication précisant si l'UE (800) a subi une collision liée à la configuration RACH pendant la procédure RACH ; et
des moyens (402) pour, sur la base du rapport d'UE, décider s'il faut modifier l'au moins une politique RACH spécifique à une tranche de réseau ou l'au moins un quota de partage de ressources spécifique à une tranche de réseau.

11. Équipement utilisateur, UE, (800) l'UE (800) comprenant :
des moyens (806) pour recevoir d'un nœud de réseau d'accès radio, RAN, (600) des informations d'orientation de canal d'accès aléatoire, RACH, pour un ensemble de tranches de réseau prises en charge dans un réseau de communication sans fil, les informations d'orientation RACH comprenant une indication pour que l'UE (800) sélectionne l'une d'une ou plusieurs configurations RACH disponibles, chacune des une ou plusieurs configurations RACH disponibles comprenant :
une ou plusieurs parmi une ressource RACH spécifique à une tranche de réseau, une ressource RACH de secours spécifique à une tranche de réseau et une ressource RACH commune ; et
une probabilité avec laquelle chacune desdites une ou plusieurs parmi la ressource RACH spécifique à une tranche de réseau, la ressource RACH de secours spécifique à une tranche de réseau et la ressource RACH commune doit être utilisée ;
des moyens (806) pour recevoir une demande de planification spécifique à une tranche de réseau pour une tranche de réseau de l'ensemble de tranches de réseau ;
des moyens (802) pour sélectionner parmi les une ou plusieurs configurations RACH disponibles, une configuration RACH correspondant à la tranche de réseau sur la base des informations d'orientation RACH ; et
des moyens (802) pour exécuter, sur la base de la demande de planification spécifique à une tranche de réseau et de la configuration RACH sélectionnée, une procédure RACH pour la tranche de réseau.

12. UE (800) selon la revendication 11, dans lequel chacune des une ou plusieurs configurations RACH disponibles amène l'UE (800) à :
- partager, au moins en partie, la ressource RACH spécifique à une tranche de réseau d'au moins une tranche de réseau de l'ensemble de tranches de réseau avec au moins une autre tranche de réseau de l'ensemble de tranches de réseau ; et/ou
- partager, au moins en partie, la ressource RACH de secours spécifique à une tranche de réseau d'au moins une tranche de réseau de l'ensemble de tranches de réseau avec au moins une autre tranche de réseau de l'ensemble de tranches de réseau ; et/ou
- utiliser, au moins en partie, la ressource RACH commune pour au moins une tranche de réseau de l'ensemble de tranches de réseau lorsqu'une procédure de repli RACH est initiée pour l'au moins une tranche de réseau.

13. UE (800) selon la revendication 11 ou 12, dans lequel les informations d'orientation RACH sont codées en un ensemble de paramètres de contrôle d'accès unifié (UAC), et dans lequel l'UE (800) comprend en outre des moyens (806) pour recevoir l'ensemble de paramètres UAC via la signalisation de diffusion.

14. UE (800) selon l'une des revendications 11 à 13, dans lequel l'UE (800) comprend en outre :
des moyens (802) pour générer un rapport d'UE après l'exécution de la procédure RACH en utilisant la configuration RACH sélectionnée, le rapport d'UE comprenant :
- une indication de la configuration RACH sélectionnée ;
- une durée d'exécution de la procédure RACH sur la base de la configuration RACH sélectionnée ; et
- une indication précisant si l'UE (800) a subi une collision liée à la configuration RACH pendant la procédure RACH ; et
des moyens (806) pour transmettre le rapport d'UE au nœud RAN (600).

15. UE (800) selon l'une des revendications 11 à 14, dans lequel la configuration RACH correspondant à la tranche de réseau comprend au moins deux des ressources RACH spécifiques à une tranche de réseau, la ressource RACH de secours spécifique à une tranche de réseau et la ressource RACH commune, et les probabilités desdites au moins deux des ressources RACH spécifiques à une tranche de réseau, de ladite ressource RACH de secours spécifique à une tranche de réseau et de ladite ressource RACH commune sont présentées sous la forme d'une distribution uniforme entre 0 et 99, et dans lequel l'UE (800) comprend en outre des moyens (802) pour sélectionner, dans la configuration RACH correspondant à la tranche de réseau, une ressource RACH parmi lesdites au moins deux des ressources RACH spécifiques à une tranche de réseau, la ressource RACH de secours spécifique à une tranche de réseau et la ressource RACH commune en utilisant un générateur de nombres aléatoires, et dans lequel la procédure RACH est exécutée sur la base de la ressource RACH sélectionnée.
